# EUROPEAN PATENT SPECIFICATION

(11) **EP 1 953 481 B1**
(45) Date of publication and mention of the grant of the patent: **18.01.2017**
(21) Application number: 08150571.1
(22) Date of filing: 23.01.2008
(51) Int. Cl.: F25D 17/04, F04D 29/62, F04D 29/70, B01D 46/30

(54) **Domestic refrigerator apparatus, with air circulation and treatment device**
Haushaltkühlschrank mit Luftzirkulation und -behandlungsvorrichtung
Appareil de réfrigération domestique avec circulation d'air et dispositif de traitement

(30) Priority: 01.02.2007 IT TO20070019 U
(43) Date of publication of application: 06.08.2008
(73) Proprietor: Indesit Company S.p.A., 60044 Fabriano (AN) (IT)
(72) Inventor: Bossi, Luca, 61040 Serra Sant'Abbondio (Pesaro Urbino) (IT); Tognini, Lorenzo, 60016 Marina di Montemarciano (Ancona) (IT); Pascolini, Maurizio, 60044 Fabriano (Ancona) (IT); Faraldi, Paolo, 18038 Sanremo (Imperia) (IT); Borruso, Enza Maria, 90128 Palermo (IT)
(74) Representative: Gallarotti, Franco

(56) References cited:
- EP-A- 0 031 311
- EP-A- 0 476 724
- WO-A-2005/043063
- DE-C- 922 536

## Description

The present invention refers to a domestic refrigerator apparatus having a device for air circulation and treatment.

The use is known, in domestic refrigerators, of air circulation devices, provided to guarantee the uniform distribution of the air and cold within a preservation compartment for food products and the like. In some solutions, the circulation device comprises a fan integrated with the structure of the refrigerator, in a non-visible position. In other solutions the fan is instead fixed to a wall of the refrigerator compartment and is provided with a casing, having aesthetic purposes, structural purposes (fixing of the ventilator in the compartment) and safety purposes (covering the ventilator and electrical parts carrying voltage). Use of air treatment means in combination with a circulation device of the indicated type, typically for filtration and/or odour removal, is also known.

The air circulation and treatment devices mounted inside of the refrigerator compartment provided according to the prior art are usually bulky or of complex construction. Another drawback of the prior art devices is their poor efficiency in terms of air treatment or exploitation of the treatment material employed. EP-A- 0476724 upon which the preamble of claim 1 is based, discloses a photocatalystic decomposing apparatus comprises absorbent including honeycomb form active carbon and titanium oxide acting as photocatalyst applied to a surface of the active carbon, and a light source for generating ultraviolet rays exciting the photocatalyst. Stink ingredient is absorbed to the active carbon by passing air flow through openings in the honeycomb, and the absorbed stink ingredient is decomposed by exciting the photocatalyst due to application of the ultraviolet rays.

WO 2005/043063 A discloses an ion delivery unit having a blower and an ion generating device is attached to the upper surface of a refrigerating chamber. The driving of the blower sucks air through a suction port disposed in a front upper area. Ions are generated by the ion generating device disposed on the delivery side of the blower and cold air containing ions is delivered through a delivery port disposed in a rear lower area.

EP-A-0031311 discloses a freezer cabinet operating without frost, wherein a circulation path for air including a moisture-absorbing means and a motor-driven fan are arranged in a freezer shelf.

The present invention has essentially the aim of providing a domestic refrigerating apparatus equipped with an air circulation and treatment device of simple and economic configuration, with a compact structure and, and above all, of high efficiency both regarding efficiency of the air treatment and concerning the exploitation of the treatment material employed. In addition, the present invention has the aim of providing a refrigerator in which the operations required for substitution of the air treatment means are extremely simple.

These and other aims are achieved, according to the present invention, by a refrigerator having the features of the attached claims. The claims form an integral part of the technical teaching provided herein concerning the invention.

Further aims and the characteristics of the invention will be clear from the following description made with reference to the attached drawings, in which:
- figure 1 is a schematic perspective view of a domestic refrigerator according to the invention;
- figure 2 is a partial perspective view of the refrigerator of figure 1;
- figures 3 and 4 are exploded views, from different angles, of an air circulation and treatment device of the refrigerator according to the invention;
- figures 5 and 6 are, respectively, a front schematic view and an exploded schematic view of an air treatment cartridge used in the device of figures 3 and 4;
- figure 7 is a partial and schematic section of the device of figures 3 and 4, in an operating condition;
- figure 8 is a perspective schematic view of a first embodiment of a casing for the device of figures 3 and 4;
- figures 9 and 10 are schematic views of a portion of the casing of figure 8, in the absence and presence of a treatment cartridge, respectively;
- figures 11-14 are different views of a second embodiment of a casing for the device of figures 3 and 4, in some of such figures there being represented also the corresponding air treatment cartridges;
- figure 15 is an exploded schematic view of an air treatment cartridge that can be used in combination with the casing of figures 11 - 14;
- figures 16 and 17 are schematic views of a portion of the casing of figures 11 - 14, in the absence and presence of a treatment cartridge of figure 15, respectively;
- figure 18 is a partial and schematic section similar to that of figure 7, but regarding an air circulation and treatment device not part of the claimed invention.

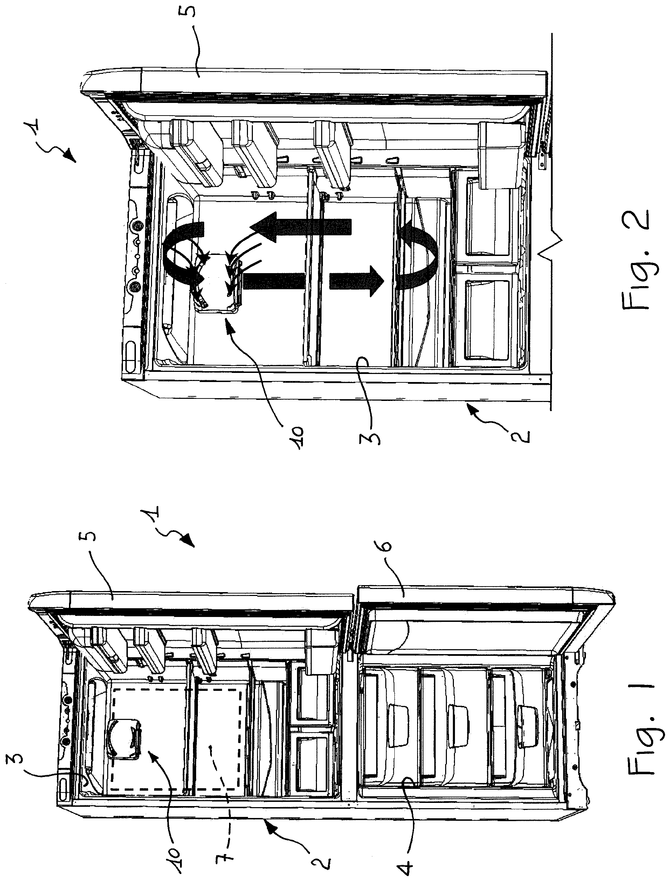

In figure 1, reference 1 indicates as a whole a domestic refrigerator according to the invention, comprising a housing or cabinet 2 thermally insulated in a known way.

In the illustrated example, the cabinet 2 delimits two compartments, indicated with 3 and 4, adapted to be refrigerated and accessible by a user through respective doors 5 and 6, hinged to the cabinet 2 and themselves thermally insulated. The compartment 3 is provided for the preservation of fresh food and is kept at a positive temperature, for example +5°C, while the compartment 4 is provided for the preservation of frozen food and is kept at a negative temperature, for example -18°C. As in the prior art, the compartments 3 and 4 are provided with internal accessories for the positioning of food, such as shelves, drawers, etc. In addition, the compartment 3 can be provided with a device suitable for its illumination, the turning on of which occurs conveniently according to the method described in the patent application WO2006/095217.

The refrigerator 1 is provided with a refrigerating circuit adapted to generate the cold required to maintain the preservation temperatures inside the compartments 3 and 4, such a circuit not being illustrated, since it is of a conception known in itself. The refrigerator according to the invention is also provided with a cooling system with air circulation, in which the intensity and uniformity of cooling of the compartment 3 can be increased according to the thermal exchange mode based on forced convection. To this purpose, the air is moved in the compartment 3 to be refrigerated through an air circulation and treatment device 10, which represents the specific subject of the invention, which is operatively associated to an evaporator 7 of the refrigerating circuit, whose extension is represented with a broken line in figure 1.

The evaporator 7 is built with a technology in itself known and therefore is not represented in detail. Here it is sufficient to mention that, in domestic refrigerators, the evaporator of the fresh food compartment generally consists of a metal tube, having a coiled configuration, in which the refrigerating gas circulates. The coiled tube is in thermal contact (conduction) with a metal plate, that performs the function of thermal dissipator and which serves to increase the thermal exchange surface. The plate is in turn in conductive thermal contact with the rear wall of the fresh food compartment, generally of plastic material, such contact area being precisely represented by the broken line in figure 1. Therefore the evaporator 7 is hidden from view, because it is imbedded in the insulating material of the refrigerator 1, but is capable of yielding the produced cold to the air in the compartment 3, so cooling its rear wall. The circulation device 10 increases the thermal exchange, since it increases the speed of the air licking the cold surface (thermal exchange by forced convection), that is, it licks at least part of the zone indicated by the broken line. Another peculiarity typical of refrigerators with dynamic or ventilated cooling is that the air and temperature distribution inside the fresh food compartment stays practically uniform at every point. The arrows in figure 2 schematically represent a possible circulation scheme of the air inside the compartment 3 provided by means of the device 10.

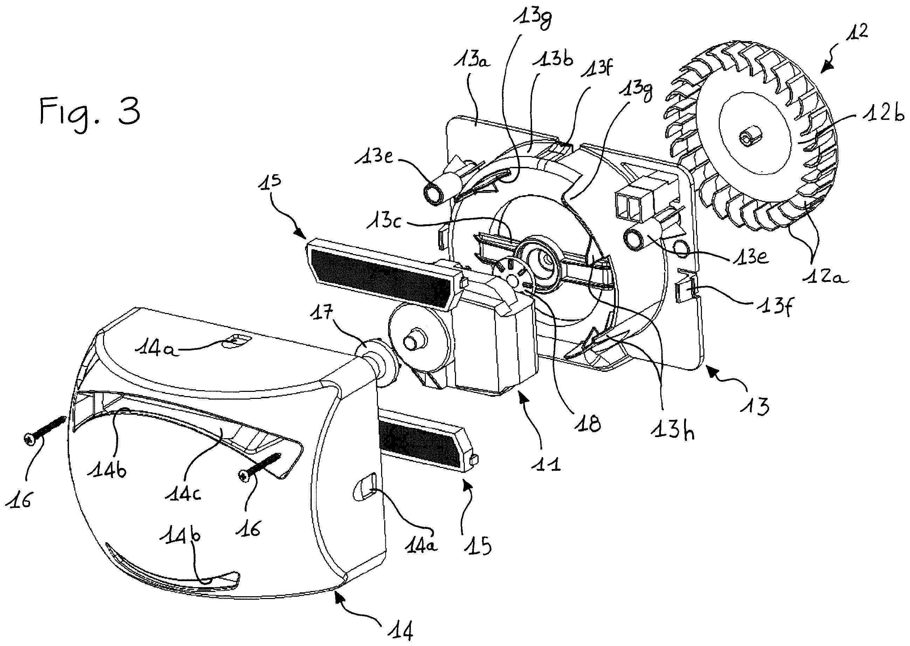

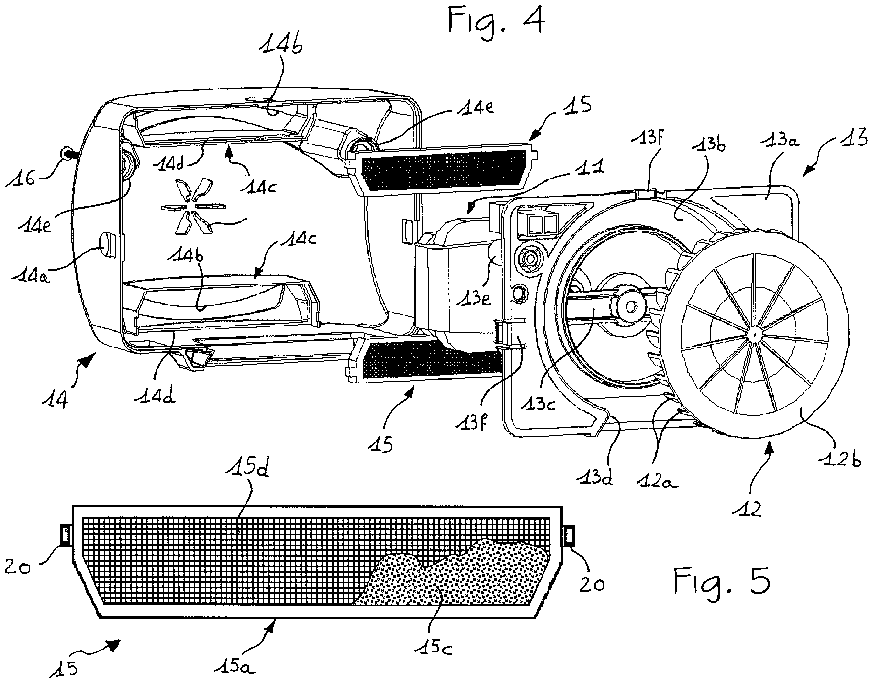

In figures 3 and 4, two exploded views of the device 10 are represented, including the main parts thereof, and namely an electric motor 11, an impeller 12, a support 13 for the motor 11 and for a covering shell 14, and one or more elements containing a material for air treatment, indicated with 15. Note that, in the figures the wiring of the fan made up of the impeller 12 and the motor 11 are not illustrated, whose power supply is managed through a corresponding power actuator (for example a relay) that is part of the control system of the refrigerator 1, not represented.

The body of the support 13 is preferably made of a single piece, particularly in moulded thermoplastic material, and it has a substantially plate-like base 13a from the front of which a tubular projection arises, mainly cylindrical, defining a seat 13b. The seat 13b opens rearwards on the base 13a and has a flange-like front portion, delimiting an opening crossed by a crosspiece 13c, having a central seat with a through-hole for the shaft of the motor 11. As can be inferred, particularly from figure 4, the cavity of the seat 13b has a lower extension 13d, designed to provide, at least in part, an outlet or efflux mouth for the air, as will be seen later. From the front of the base 13a hollow protrusions 13e arise, designed to receive screws 16 for fixing the support 13 to the rear wall of the compartment 3 of the refrigerator 1, as well as winglets or elastic hooking teeth 13f, designed to cooperate with respective openings or eyelets 14a provided on the cover 14 to keep the latter in position. In the flange-like part of the housing 13b, first front projections 13g arise, for the positioning of the air treatment elements 15 and second frontal projections 13h, for the fixed positioning of the body of the motor 11.

The impeller 12, preferably made of moulded plastic material, possibly with a metal core for keying to the shaft of the motor 11, is of the centrifugal type and has a series of blades 12a substantially arc-shaped, such blades arising perpendicularly from a disk-like part 12b. The size of the impeller 12 is such to allow its positioning completely inside the seat 13b of the support 13.

The covering shell 14, which, with the support 13, provides the casing of the device 10, is preferably formed in a single piece in moulded thermoplastic material and has a hollow box-like shape, opened at the back and defining a cavity providing which allows for housing the volume of the motor 11; in the illustrated example, the covering has a generally parallelepiped shape with rounded front corners. The front wall of the shell 14 has, only two transverse slots, an upper and a lower one, indicated with 14b, which embody respective mouths for suction of air from the compartment 3.

As can be seen in figure 4, in the inner part of the shell 14, at each slot 14b, substantially tubular ducts 14c start, extending axially toward the fan, substantially parallel to the rotational axis of the impeller 12. The ducts 14c have an oblong cross-section for air passage and have, on the end opposite to the slot 14b, a step 14d. In the illustrated example, the upper slot 14b has a transverse extension which is greater than corresponding duct 14c and the lower slot 14b. In correspondence with the ends of the upper slot 14b, inside the shell 14, two projections 14e are formed, destined to couple by partial insertion in the protrusions 13e of the support 13. In the exemplified case, the projections 14e have a through-hole, although such characteristic is not strictly required for the purpose of implementing the invention. The front wall of the shell 14 has, in its inner part, protrusions 14f, for the positioning of a guide member 17 (figure 3) for the shaft of the motor 11; a substantially similar guide member, indicated with 18 in figure 3, is designed to be positioned at a corresponding seat provided in the central region of the crosspiece 13c of the support 13.

As can be inferred from figures 3 and 4, each air treatment element 15 has an overall elongated configuration, that is, having a dimension (here defined as width) notably greater with respect to the other two dimensions (height and thickness). Each element 15 is configured as a replaceable cartridge having a structural part shaped to contain one or more materials so to perform one or more treatment function. In the preferred embodiment, the elements 15, henceforth defined as cartridges, essentially provide for the functions of mechanical filtration and antibacterial filtration of the air. In possible variants, also, the cartridges can perform, in addition or in alternative to the above-said filtration functions, the function of odour removal and/or the function of fragrance or perfume dispensing. Many materials exist that, suitably treated, perform the cited functions and which are not described herein, since they are widely known in air treatment technology. As a non-limiting example, the material described in the patent application WO2006/087754 can be used as an antibacterial filtering material included in each element 15.

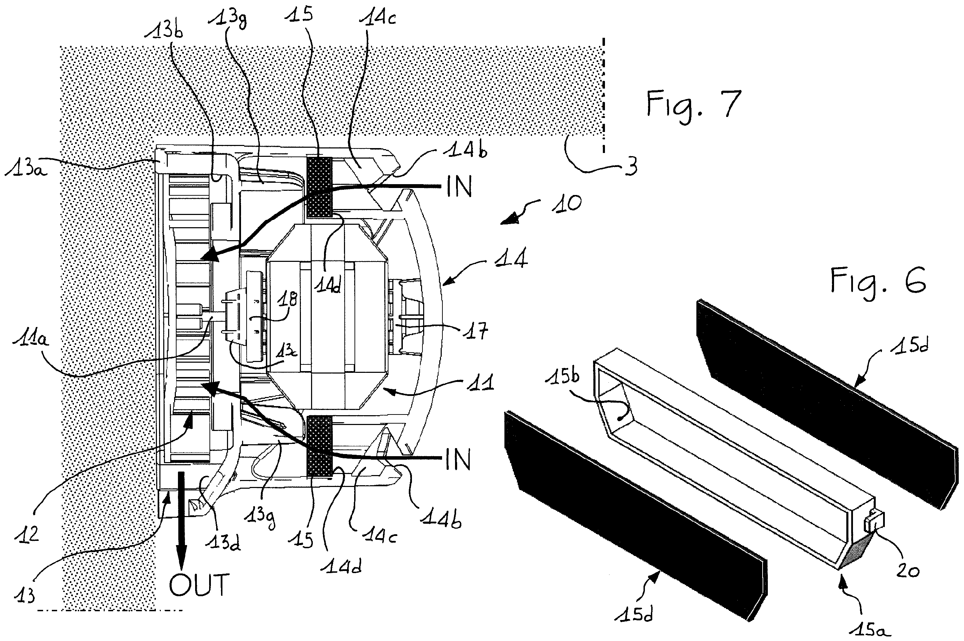

Figures 5 and 6 schematically illustrate a possible embodiment of a cartridge 15 that can be used in the device 10 of figures 3 and 4. In the exemplified case, the cartridge 15 includes a frame 15a, made of plastic or metal material, having a structural function and defining a through cavity 15b, that acts as a containing volume for the air treatment material, the latter being indicated by 15c only in figure 5. The treatment material can be conveniently in a powder-like form. The cartridge 15 further comprises two containment elements 15d, fixed at the axial openings of the cavity 15b, and having the function of containment of the material 15c, allowing at the same time the passage of air. The containment elements 15d can be made of any suitable material permeable to air, such as fabric, a generic fibre or a thin metal mesh. The choice of the degree of permeability of the elements 15d depends upon the nature and granulometry of the active material 15c to be contained, as well as upon the corresponding fluid dynamics flow resistances.

In figure 7 the device 10 is schematically shown by a cross section, in the assembled position. The support 13 is fixed to the rear wall of the compartment 3 through the screws 16 of figures 3 and 4, whose heads abut a narrowing inside the hollow protrusions 13e (figure 3) of the support itself. The shell 14 is hooked onto the support 13 through coupling of the teeth 13f with the eyelets 14a. The shaft 11a of the motor 11, being inserted in the hole of the crosspiece 13c, protrudes inside the housing 13b and the impeller 12 is keyed to it. The motor 11 is kept in position by the guide members 17, 18 of the shaft 11a, as well as through the fixing projections 13h of the support 13. As can be seen, the impeller wheel 12 is located within the seat 13b of the support 13: actually, the casing of the impeller is formed by the above-said seat 13b and a respective portion of the rear wall of the compartment 3. The cartridges 15 are positioned at the inner end of the ducts 14c, in particular abutting against the steps 14d and kept in position, on the opposite side, through the projections 13g of the support 13. Therefore, as can be inferred, the inner end portion of each duct 14c is configured to mechanically couple with the structural part or frame (15a) of the corresponding cartridge 15, such that air flow in transit is concentrated on the treatment material, without any leakages.

As indicated by the arrows IN and OUT, the device 10 operates for sucking air from the compartment 3 through the mouths embodied by the slots 14b, with the ducts 14c that direct the air itself through the cartridges 15 and with these cartridges that retains, for example, the airborne impurities and dusts. Then the air passes through the front opening of the seat 13b, to be expelled by the impeller 12 again into the compartment 3, through the outlet mouth embodied by the cavity extension 13d.

Figures 3 and 4 relate to a manufacturing solution of the device 10 that requires the removal of the shell 14 for the purpose of substituting the cartridges 15. In such a solution, the cover 14 can be easily removed, by simply acting on the elastic hooking means 13f: after cover removal, the exhausted cartridges 15 can be taken from their seats 14c and replaced with new cartridges, and the cover 14 hooked again in place.

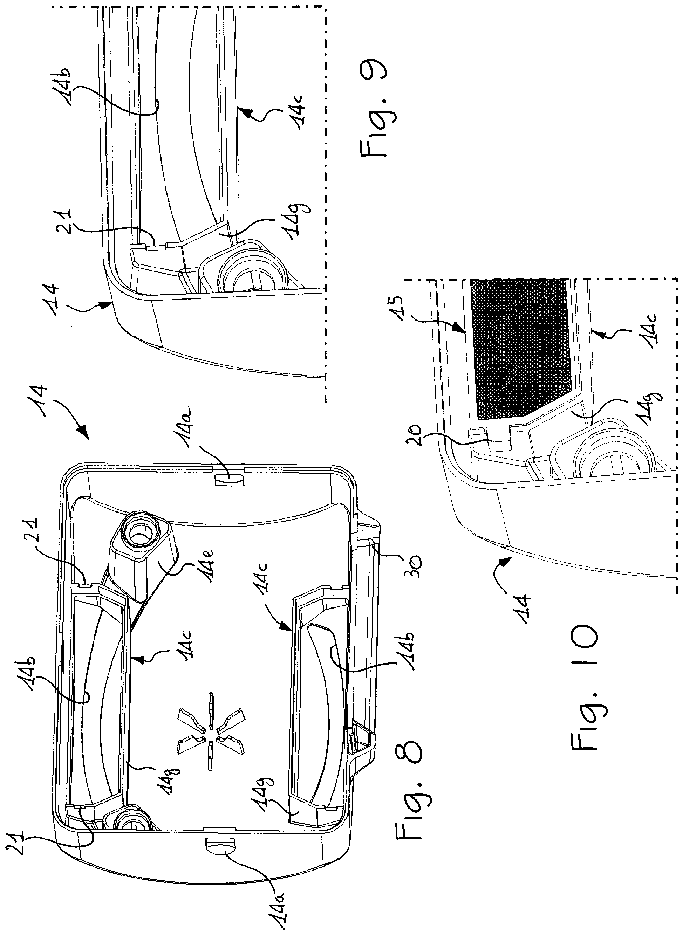

In an embodiment of the invention, the device 10 provides for a system to hook also the cartridges 15 at the respective operating position. A possible embodiment of this kind is shown in figures 8 - 10, in combination with the already cited figures 5 and 6. In such an embodiment, the frame 15a of the cartridges 15 is provided at the two longitudinal ends with winglets or teeth 20, visible in figures 5 and 6, designed for hooking at corresponding seats, indicated by 21 in figures 8 and 9; as can be seen, the seats are formed along the edge of an inner wall 14g of the cover 14, delimiting the duct 14c of a corresponding cartridge 15.

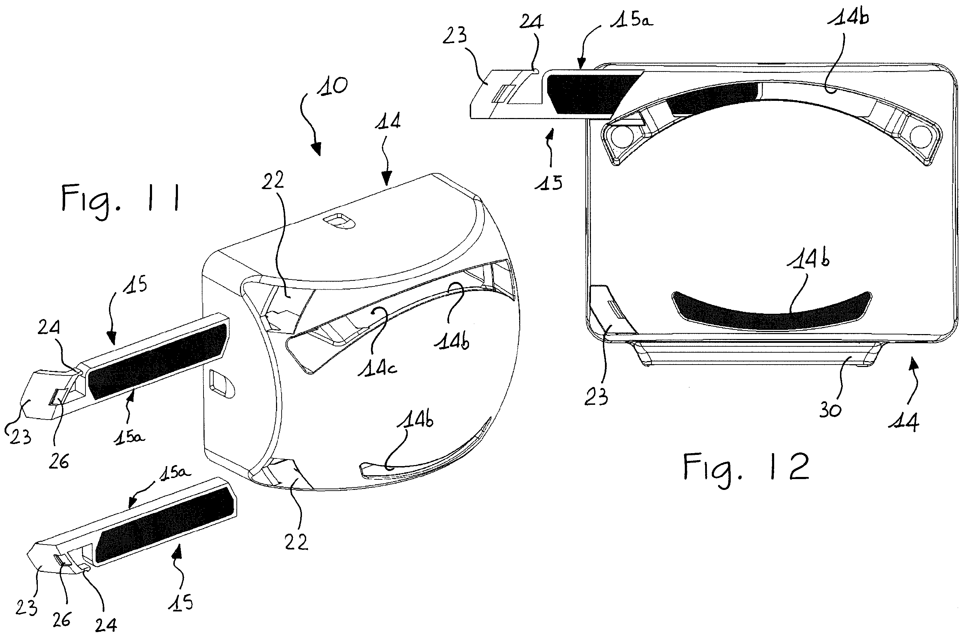

In a particularly advantageous embodiment of the invention, the device 10 is configured such that the cartridge or cartridges 15 can be replaced without the need for removing the shell 14. An embodiment of this type is illustrated in figures 11 - 14.

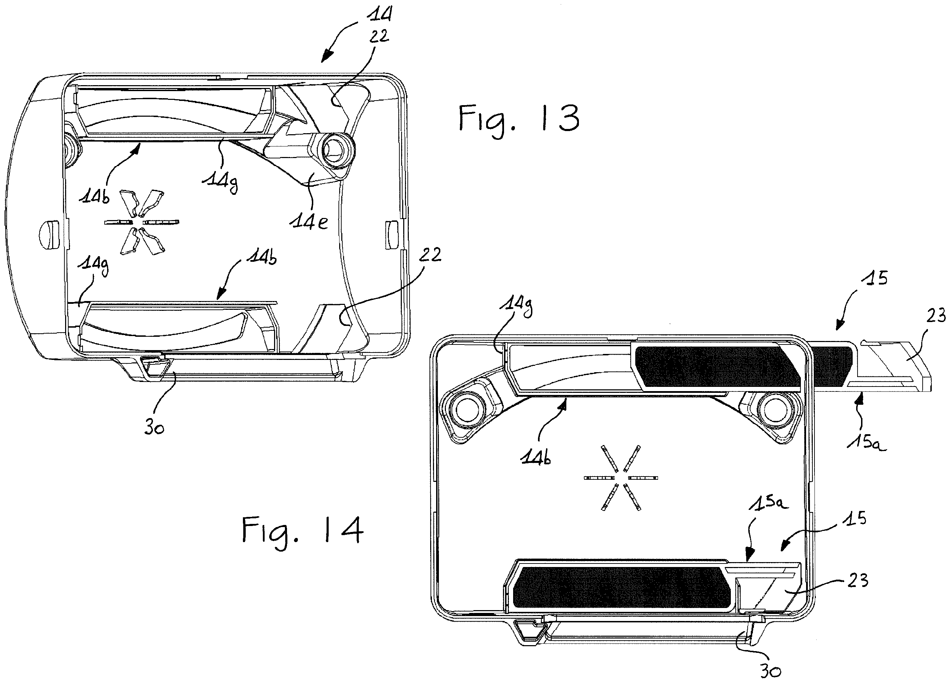

According to such a configuration, the cartridges 15 can be extracted laterally from the device 10, through corresponding passages 22 provided in the side part of the shell 14, and therefore with a movement substantially perpendicular to the rotation axis of the impeller 12. Each opening 22 is substantially aligned with an inner end region of a corresponding duct 14c, as can be seen for example in figure 13. From such figure, as well as from figure 14, it can be noted how the walls 14g, in their portions facing into the passages 22, have a reduction in height, to allow transverse sliding of the cartridge toward the inside and outside of the corresponding duct 14c. From figures 13 and 14 it can be also noted how, in this embodiment, the projection 14e proximate to the upper opening 22 is shaped to act as a guide and support element of the corresponding cartridge 15. The presence of the projections 13g of the support 13 allows to guide and align each cartridge 15 within the respective housing formed at the inner end of the duct 14c.

In this embodiment, as is visible in figure 11, the frame 15a of each cartridge has a respective gripping projection 23, whose end portion has a shape being consistent to the shape of the respective opening 22 and a profile being consistent to the outer profile of the shell 14. In this way, in the mounted condition, the device 10 has no protruding parts, although the projections are directly accessible from outside, so to allow removal of the cartridges 15 even without having to remove the shell 14 from the respective support 13. See, for this purpose, the projection 23 of the lower cartridge in figure 12.

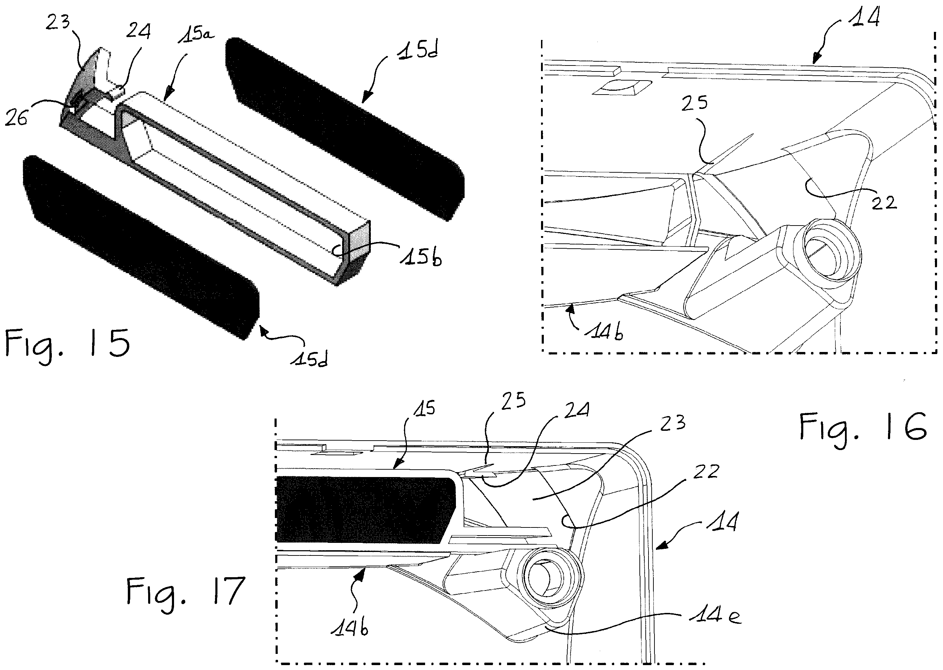

Also in the embodiment with removable cartridges 15, a system for hooking the cartridges in position can advantageously be provided. In the example shown in figures 15 - 17 such system comprises an elastic winglet with a tooth 24, formed in the projection 23 of the frame 15a. Such tooth 24 is destined to engage with a corresponding hooking means, represented by a groove 25 provided on the inner part of the shell 14. The unhooking and subsequent extraction of a cartridge 15 can be preformed by pushing the projection 23 toward the outside of the shell 14, for example with a fingernail or with a tool (such as a screwdriver), the projection 23 having an indentation for such purpose, indicated with 26 in figures 12 and 15.

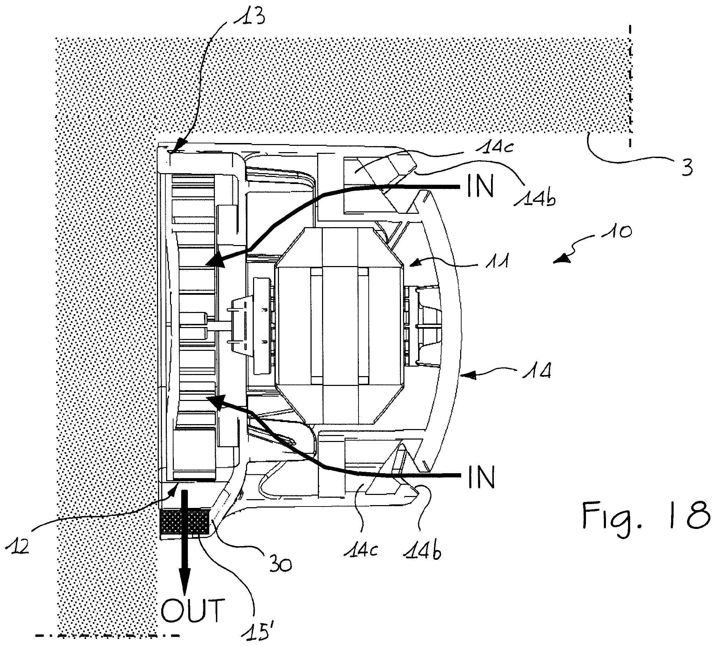

Figure 18 illustrates a further possible embodiment not part of the claimed invention, according to which the device 10 is provided with a cartridge 15' mounted close to the fan outlet 13d. In such an example, the air in compartment 3 is then substantially treated downstream of the circulation system. The cartridge 15' can have a general configuration similar to the one represented in figures 5 and 6 and be mounted on slides or hooks defined in the support 13 of the shell 14, allowing for its removal for replacement purposes. The hooking system can be conceived to allow removal of the cartridge 15' either in the horizontal or vertical direction.

In a possible embodiment, the shell 14 has a lower extension of the type indicated with 30 in figures 12 and 14, defining a respective duct for directing air through the cartridge 15', of a substantially similar conformation to that of the ducts 14c. Also in such embodiment, the device 10 can be provided with a hooking system similar to that described with reference to figures 8 - 10, for the case in which replacement of the cartridge 15' implies the removal of the shell 14. Alternatively, the cartridge 15' can be directly accessible from the outside, for example in a sliding manner, through a configuration conceptually similar to the one described with reference to figures 11 - 14. Thus, in practice, the lower extension 30 of the shell 14 will be provided with a side passage, aligned with the housing for the cartridge 15', and the latter will be provided with a side gripping projection. Also in this embodiment, a system for hooking the cartridge 15' in position can be provided, conceptually similar to the one described with reference to figures 16 and 17.

Power supply to the motor is managed by the control system of the refrigerator 1, not represented in the figures since of a conception being generally known in itself. The control system can be configured so to provide specific operating cycles for the device 10, so to optimise each time the treatment of the air inside the compartment 3, for example, in function of the number and/or duration and/or frequency of openings of the door 5 by the user of the refrigerator 1. For this purpose, the control system is preferably of an electronic type, including a micro-controller provided with a clock function and non-volatile memory means in which the operating programs are codified, as well as power actuators of known type, for the control of the electrical loads of the refrigerator, and sensor means, also being of known type, to detect the state of the door 5 (open or closed).

Providing the refrigerator with means adapted to detect the state and time of opening and/or closing of the door 5 also makes possible the deactivation of the device 10, when the door itself is opened by the user, by interrupting the power supply to the motor 11: such a measure is designed to prevent the device 10 from inhaling non-treated air external to the compartment 3 when the door 5 is open.

One of the programs codified in the control system of the refrigerator 1 can be designed such that, based on the opening time of the door 5, the duration of the activity and speed of the motor 11 are adjusted, so to perform an air treatment which is targeted and proportioned to such opening time (for example: the longer the door opening time, the more impure external air will enter the compartment 3, and therefore the higher the intensity and/or duration of the forced circulation would be, aimed at restoring a purified environment in the least possible time).

The control system of the refrigerator can also provide for a plurality of treatment cycles, designed to control a continuous circulation of the air in the compartment 3 for a duration the varies in function of the type and efficacy of the active material contained in the cartridge or cartridges 15. In this case, the program of interest can be selected by the user, among a plurality of possible programs, on the control board of the refrigerator, with the corresponding command means that allows the selection of the program based on the type of functionality associated with the cartridge or cartridges 15 (for example: mechanical filtration, bacterial filtration, odour removal, aroma dispensing, and possible combinations thereof).

The electronic control system can also be prearranged to synchronize the switching on and/or off of the device 10 and the switching on and/or off of electrical loads of the refrigeration circuit (for example: compressor, etc.). In this way, a correct compromise between the increment of cooling inside the compartment 3 and electrical energy consumption by the fan is obtained.

From the above description, the characteristics of the present invention are clear, as well as its advantages.

The refrigerator is provided with an air circulation and treatment device of simple, economical and compact construction.

The casing of the device can be made of two single parts, each obtainable in a single piece of plastic material, and capable of reciprocal coupling through hooking or elastic fixing means. The dimensions of the casing are very small, practically the minimum required for containing the motor and the impeller of the fan, as well as the air-treatment means. The use of a centrifugal fan and the particular shaping of the fixing support, which allows for exploiting part of the wall of the compartment to delimit the impeller casing, enable further bulk reduction.

A substantial advantage of the invention is represented by the particular conformation of the cartridges and by the presence of the corresponding ducts/housings, which allow precise direction of the air flows through the treatment material, without any leakages and with a homogenous exploitation of such material. The solution is practically free from the problem, typical of the prior art, concerning formation of preferential pathways for the air through treatment means having a wide-surface. The particular elongated conformation allows efficient positioning of the cartridges within the device casing, even if the casing has reduced dimensions. In addition, the illustrated arrangement allows for savings of active material without affecting treatment quality.

It is clear that numerous variants to the refrigerator described as an example are possible for the man skilled in the art, without departing from the scope of the invention as defined in the attached claims.

In a variant, the electronic control system of the refrigerator 1 is configured to drive the device 10 keeping information relative to consumption and/or cost of electrical energy under consideration, such an electronic control system being prearranged, in a manner known per se, for activating the air circulation - treatment function when the hourly energy cost is lowest: in such a variant, the refrigerator can conveniently be equipped with and electronic control system according to the patent application EP1434056.

In a further possible variant, the device 10 is provided with sensing means adapted to detect the degree of clogging of the cartridges 15, for example through measurement of the pressure drop at the inlet and the outlet of the cartridges.

In a further variant, the device 10 is associated with suitable signalling means, adapted to communicating to the user at least one piece of information and/or parameter relating to the device itself and/or to its operating mode. Signalling lights, displays and any other commonly used means can be used as a signalling means to allow the user to interact with the control system of the refrigerator. For example, through a dedicated signalling light it is possible to inform the user of the clogging state of the cartridges 15, so to allow the user himself to perform the required cleaning or replacement operations.

Suitable manual command means can be associated to the device 10, such as for example a button allowing the user to activate or deactivate at will the air circulation and treatment system.

The positioning of the circulating device 10 as previously illustrated is not binding, provided that the device itself could be fixed in any other position inside the compartment 3, and possibly inside the compartment 4.

## Claims

1. Domestic refrigerating apparatus having a cabinet (2), in which at least one compartment for the preservation of products (3) is defined, and an air circulation and treatment device (10) which comprises:
- a casing (13, 14) having at least one air inlet (14b) and at least one air outlet (13d), the casing having a supporting part (13) fixed to a wall of said compartment (3),
- a fan (11, 12), mounted in said casing (13, 14), having at least one impeller (12) and one motor (11) controlled by a control system of the refrigerator (1), and
- air-treatment means (15; 15') adapted to be struck by a flow of forced air (IN, OUT) induced by the operation of the fan (11, 12), the treatment means (15; 15') being of replaceable type and comprising one cartridge element (15) having a structural part (15a) defining a containing volume (15b) for an air treatment material (15c),
the cartridge element (15) has an elongated shape,
**characterised in that** at least one of said air inlet (14b) and air outlet (13d) consists of one slot (14b) formed in a wall of said casing (13, 14), from which one respective air-directing duct (14c; 30) extends towards the inside of the casing (13, 14), said one duct (14c; 30) being defined by said casing (13, 14) and having a passage section of oblong shape, and **in that** said cartridge element (15) is prearranged for coupling with said one duct (14c, 30), said structural part (15a) being configured to mechanically couple with an inner end portion of said one duct (14c; 30) opposite to said slot (14b), such that the air flow is concentrated by said one duct (14c, 30) through the treatment material for a homogenous exploitation thereof.

2. Apparatus according to claim 1, **characterised in that** said fan (11, 12) is a centrifugal fan.

3. Apparatus according to claim 1 or 2, **characterised in that** said one duct (14c) is a tubular duct

4. Apparatus according to claim 1, **characterised in that** said cartridge element (15) is prearranged for being removed from said casing (13, 14) and comprises a gripping portion (23) facing the outside of said casing (13, 14), said gripping portion (23) having a particular profile which is consistent with the outer profile of said casing (13, 14).

5. Apparatus according to claim 1, **characterised in that** said casing (13, 14) comprises at least one shell (14) for covering said supporting part (13) and said motor (11), said shell being mounted on said supporting part (13), said one duct (14c; 30) being defined in said shell (14).

6. Apparatus according to claim I or 2, **characterised in that** said supporting part (13) has a portion (13) for fixing to said wall of said compartment (3) and a tubular portion (13b) within which said impeller (12) is housed, the tubular portion (13b) being closed at an axial end thereof through said wall of said compartment (3) and having a side opening (13d) defining at least in part said at least one outlet.

7. Apparatus according to claim 6, **characterised in that** said supporting part (13) integrates fixing means for said motor (11), the motor being operatively arranged between said tubular portion (13b) and a front wall of a covering shell (14) that, together with said supporting part (13), form said casing.

8. Apparatus according to claim 4, **characterised in that** said cartridge (15) is slidingly mounted into said casing (13, 14) and said casing has at least one side opening (22) through which said gripping portion (23) is accessible.

9. Apparatus according to at least one of the previous claims, **characterised in that** said at least one inlet comprises one said slot (14b) and a respective one said duct (14b) that extends in length starting from said slot (14b) toward said impeller (12).

10. Apparatus according to at least one of the previous claims, **characterised in that** said casing (13, 14) and said cartridge element (15) comprise means for elastic reciprocal hooking (20, 21; 24, 25).

11. Apparatus according to at least one of the previous claims, **characterised in that** said supporting part (13) and said covering shell (14) comprise means for elastic reciprocal hooking (13f, 14a).

12. Apparatus according to at least one of the previous claims, **characterised in that** said one duct (14b) has, in an end region thereof, an abutment step (14d) for said cartridge element (15).

13. Apparatus according to at least one of the previous claims, **characterised in that** said casing (13, 14) has a wall in which two said slots (14b) are formed, being opposite with respect to a central region of the same wall, from each of said slots (14b) one said duct (14c) departing, in the end region of the duct (14b) opposite to the respective slot (14b) there being mounted a respective cartridge element (15).

14. Apparatus according to at least one of the previous claims, **characterised in that** said control system is configured so to manage operating cycles of said device (10) that differ from each other in function of at least one of the number and/or the duration and/or the frequency of opening of a door (5) of said compartment (3), or else in function of the type of treatment material in said at least one cartridge element (15).

15. Apparatus according to at least one of the previous claims, **characterised in that** said cartridge element (15) is prearranged to perform at least one of the following air treatments: mechanical filtration, bacterial filtration, odour removal, aroma dispensing.

## Patentansprüche

1. Haushaltskühlgerät mit einem Gehäuse (2), in dem mindestens ein Fach für die Konservierung von Produkten (3) definiert ist, und mit einer Luftzirkulations- und Bearbeitungsvorrichtung (10), die umfasst:
- ein Gehäuse (13, 14) mit mindestens einem Lufteinlass (14b) und mindestens einem Luftauslass (13d), wobei das Gehäuse einen an der Wand des Fachs (3) befestigten Stützteil (13) aufweist,
- ein Gebläse (11, 12), das in dem Gehäuse (13, 14) angebracht ist und das mindestens ein Flügelrad (12) und einen Motor (11) umfasst, der durch eine Steuerung des Kühlgerätes (1) gesteuert wird, und
- Luftbehandlungsmittel (15, 15'), die eingerichtet sind, durch einen Fluss von gerichteter Luft (IN, OUT), der durch den Betrieb des Gebläses (11, 12) erzeugt wird, getroffen zu werden, wobei die Behandlungsmittel (15, 15') austauschbar sind und eine Kartusche (15) umfassen, die einen strukturellen Teil (15a), der ein Volumen (15b) für ein Luftbehandlungsmaterial (15c) definiert,
wobei die Kartusche (15) eine langgestreckte Form aufweist,
**dadurch gekennzeichnet, dass** mindestens der Lufteinlass (14b) und/oder der Luftauslass (13d) aus einem in einer Wand des Gehäuses (13, 14) gebildeten Schlitz (14) besteht, von dem sich jeweils ein Luftleitkanal (14c, 30) zum Inneren des Gehäuses (13, 14) erstreckt, wobei der Kanal (14c, 30) durch das Gehäuse (13, 14) definiert ist und einen Durchgangsabschnitt mit einer länglichen Form aufweist, und dadurch, dass die Kartusche (15) vorbereitet ist, mit dem Kanal (14c, 30) verbunden zu werden, wobei der strukturelle Teil (15a) eingerichtet ist, mechanisch mit einem innenliegenden Endbereich des Kanals (14c, 30), der gegenüber dem Schlitz (14b) liegt, verbunden zu werden, sodass der Luftfluss mittels des Kanals (14c, 30) durch das Behandlungsmaterial für eine homogene Förderung dadurch konzentriert wird.

2. Vorrichtung nach Anspruch 1, **dadurch gekennzeichnet, dass** das Gebläse (11, 12) ein Zentrifugallüfter ist.

3. Vorrichtung nach Anspruch 1 oder 2, **dadurch gekennzeichnet, dass** der Kanal (14c) ein röhrenförmiger Kanal ist.

4. Vorrichtung nach Anspruch 1, **dadurch gekennzeichnet, dass** die Kartusche (15) vorbereitet ist, vom Gehäuse (13, 14) entfernt zu werden und einen Haltebereich (23) umfasst, der der Außenseite des Gehäuses (13, 14) zugewandt ist, wobei der Haltebereich (23) ein bestimmtes Profil aufweist, das konsistent mit dem äußeren Profil des Gehäuses (13, 14) ist.

5. Vorrichtung nach Anspruch 1, **dadurch gekennzeichnet, dass** das Gehäuse (13, 14) mindestens eine Hülle (14) zum Bedecken des Stützteiles (13) und des Motors (11) aufweist, wobei die Hülle auf dem Stützteil (13) befestigt ist, und wobei der Kanal (14c, 30) durch die Hülle (14) definiert ist.

6. Vorrichtung nach Anspruch 1 oder 2, **dadurch gekennzeichnet, dass** der Stützteil (13) einen Bereich (13) zum Befestigen an der Wand des Fachs (3) und einen röhrenförmigen Bereich (13b), in dem das Flügelrad (12) eingehaust ist, aufweist, wobei der röhrenförmige Bereich (13b) an einem axialen Ende davon durch die Wand des Fachs (3) geschlossen ist und eine Seitenöffnung (13d) aufweist, die zumindest teilweise den mindestens einen Auslass definiert.

7. Vorrichtung nach Anspruch 6, **dadurch gekennzeichnet, dass** das Stützteil (13) Befestigungsmittel für den Motor (11) integriert hat, wobei der Motor zum Betrieb zwischen dem röhrenförmigen Teil (13b) und einer Vorderwand einer Abdeckhülle (14) angeordnet ist, die zusammen mit dem Stützteil (13) das Gehäuse formen.

8. Vorrichtung nach Anspruch 4, **dadurch gekennzeichnet, dass** die Kartusche (15) verschiebbar in dem Gehäuse (13, 14) befestigt ist und das Gehäuse mindestens eine Seitenöffnung (22) aufweist, durch die der Haltebereich (23) zugänglich ist.

9. Vorrichtung nach einem der vorhergehenden Ansprüche, **dadurch gekennzeichnet, dass** mindestens ein Einlass einen Schlitz (14b) und jeweils einen Kanal (14b) umfasst, der sich entlang seiner Länge vom Schlitz (14b) in Richtung auf das Flügelrad (12) erstreckt.

10. Vorrichtung nach einem der vorhergehenden Ansprüche, **dadurch gekennzeichnet, dass** das Gehäuse (13, 14) und die Kartusche (15) Mittel zum elastischen gegenseitigen Einhaken (20, 21, 24, 25) aufweisen.

11. Vorrichtung nach einem der vorhergehenden Ansprüche, **dadurch gekennzeichnet, dass** das Stützteil (13) und die Hülle (14) Mittel zum elastischen gegenseitigen Einhaken (13f, 14a) aufweisen.

12. Vorrichtung nach einem der vorhergehenden Ansprüche, **dadurch gekennzeichnet, dass** der Kanal (14b) in seinem Endbereich einen Widerlagervorsprung (14d) für die Kartusche (15) aufweist.

13. Vorrichtung nach einem der vorhergehenden Ansprüche, **dadurch gekennzeichnet, dass** das Gehäuse (13, 14) eine Wand aufweist, in der zwei der Schlitze (14b) ausgebildet sind, die einander im Bezug auf einen zentralen Bereich der gleichen Wand gegenüberliegen, von jedem der Schlitze (14b) einer der Kanäle (14c) weggeht und im Endbereich des Kanals (14b) gegenüber dem entsprechenden Schlitz (14b) eine entsprechende Kartusche (15) befestigt ist.

14. Vorrichtung nach einem der vorhergehenden Ansprüche, **dadurch gekennzeichnet, dass** das Steuersystem eingerichtet ist, Betriebszyklen der Vorrichtung (10) durchzuführen, die unterschiedlich voneinander und funktional abhängig von der Anzahl und/oder der Dauer und/oder der Frequenz des Öffnens einer Tür (5) des Fachs (3) oder vom Typ des Behandlungsmaterials in der mindestens einen Kartusche (15) sind.

15. Vorrichtung nach einem der vorhergehenden Ansprüche, **dadurch gekennzeichnet, dass** die Kartusche (15) vorbereitet ist, mindestens eine der folgenden Luftbehandlungen auszuführen: Mechanische Filterung, bakterielle Filterung, Geruchsentfernung, Aromaverteilung.

## Revendications

1. Appareil de réfrigération domestique comportant un meuble (2), dans lequel au moins un compartiment destiné à la conservation de produits (3) est défini, et un dispositif de circulation d'air et de traitement (10) qui comprend :
- un boîtier (13, 14) ayant au moins une entrée d'air (14b) et au moins une sortie d'air (13d), le boîtier ayant une partie de support (13) fixée à une paroi dudit compartiment (3),
- un ventilateur (11, 12), monté dans ledit boîtier (13, 14) ayant au moins une hélice (12) et un moteur (11) commandés par un système de commande du réfrigérateur (1), et
- un moyen de traitement d'air (15; 15') adapté pour être frappé par un flux d'air forcé (IN, OUT) induit par le fonctionnement du ventilateur (11, 12), le moyen de traitement (15; 15') étant de type remplaçable et comprenant un élément de cartouche (15) ayant une partie structurelle (15a) définissant un volume de confinement (15b) pour un matériau de traitement d'air (15c),
l'élément de cartouche (15) a une forme allongée,
**caractérisé en ce qu'**au moins l'une de ladite entrée d'air (14b) et de ladite sortie d'air (13d) consiste en une fente (14b) formée dans une paroi dudit boîtier (13, 14), à partir duquel un conduit dirigeant l'air respectif (14c; 30) s'étend vers l'intérieur du boîtier (13, 14), ledit un conduit (14c; 30) étant défini par ledit boîtier (13, 14) et ayant une section de passage de forme oblongue, et **en ce que** ledit élément de cartouche (15) est pré-agencé pour couplage avec ledit un conduit (14c; 30), ladite partie structurelle (15a) étant configurée pour se coupler mécaniquement avec une portion d'extrémité interne dudit un conduit (14c; 30) opposée à ladite fente (14b), de telle sorte que le flux d'air est concentré par ledit un conduit (14c; 30) à travers le matériau de traitement pour son exploitation homogène.

2. Appareil selon la revendication 1, **caractérisé en ce que** ledit ventilateur (11, 12) est un ventilateur centrifuge.

3. Appareil selon la revendication 1 ou 2, **caractérisé en ce que** ledit un conduit (14c) est un conduit tubulaire.

4. Appareil selon la revendication 1, **caractérisé en ce que** ledit élément de cartouche (15) est pré-agencé pour être enlevé dudit boîtier (13, 14) et comprend une portion de préhension (23) en regard de l'extérieur dudit boîtier (13, 14), ladite portion de préhension (23) ayant un profil particulier qui est cohérant avec le profil externe dudit boîtier (13, 14).

5. Appareil selon la revendication 1, **caractérisé en ce que** ledit boîtier (13, 14) comprend au moins une coque (14) permettant de couvrir ladite partie de support (13) et ledit moteur (11), ladite coque étant montée sur ladite partie de support (13), ledit un conduit (14c; 30) étant défini dans ladite coque (14).

6. Appareil selon la revendication 1 ou 2, **caractérisé en ce que** ladite partie de support (13) comporte une portion (13) pour fixation à ladite paroi dudit compartiment (3) et une portion tubulaire (13b) au sein de laquelle ladite hélice (12) est logée, la portion tubulaire (13b) étant fermée à son extrémité axiale à travers ladite paroi dudit compartiment (3) et ayant une ouverture latérale (13d) définissant au moins en partie ladite au moins une sortie.

7. Appareil selon la revendication 6, **caractérisé en ce que** ladite partie de support (13) intègre un moyen de fixation pour ledit moteur (11), le moteur étant opérationnellement agencé entre ladite portion tubulaire (13b) et une paroi avant d'une coque de couverture (14) qui, conjointement avec ladite partie de support (13), forme ledit boîtier.

8. Appareil selon la revendication 4, **caractérisé en ce que** ledit boîtier (15) est monté en coulissement dans ledit boîtier (13, 14) et ledit boîtier comporte au moins une ouverture latérale (22) à travers laquelle ladite portion de préhension (23) est accessible.

9. Appareil selon au moins l'une des revendications précédentes, **caractérisé en ce que** ladite au moins une entrée comprend une dite fente (14b) et un dit conduit respectif (14b) qui s'étend en longueur depuis ladite fente (14b) vers ladite hélice (12).

10. Appareil selon au moins l'une des revendications précédentes, **caractérisé en ce que** ledit boîtier (13, 14) et ledit élément de cartouche (15) comprennent un moyen de crochetage réciproque élastique (20, 21; 24, 25).

11. Appareil selon au moins l'une des revendications précédentes, **caractérisé en ce que** ladite partie de support (13) et ladite coque de couverture (14) comprennent un moyen de crochetage réciproque élastique (13f, 14a).

12. Appareil selon au moins l'une des revendications précédentes, **caractérisé en ce que** ledit un conduit (14b) a, dans une région d'extrémité de celui-ci, une marche de butée (14d) pour ledit élément de cartouche (15).

13. Appareil selon au moins l'une des revendications précédentes, **caractérisé en ce que** ledit boîtier (13, 14) comporte une paroi dans laquelle lesdites deux fentes (14b) sont formées, étant opposées par rapport à une région centrale de la même paroi, à partir de chacune desdites fentes (14b) un dit conduit (14c) en démarrant dans la région d'extrémité du conduit (14b) opposé à la fente respective (14b), où est monté un élément de cartouche respectif (15).

14. Appareil selon au moins l'une des revendications précédentes, **caractérisé en ce que** ledit système de commande est configuré de manière à gérer des cycles de fonctionnement dudit dispositif (10) qui diffèrent les uns des autres en fonction d'au moins l'un du nombre et/ou de la durée et/ou de la fréquence d'ouverture d'une porte (5) dudit compartiment (3), ou sinon en fonction du type de matériau de traitement dans ledit au moins un élément de cartouche (15).

15. Appareil selon au moins l'une des revendications précédentes, **caractérisé en ce que** ledit élément de cartouche (15) est pré-agencé pour réaliser au moins l'un des traitements d'air suivants : filtration mécanique, filtration bactérienne, élimination d'odeur, dispense d'arôme.
